(19) Europäisches Patentamt
European Patent Office
Office européen des brevets

(11) EP 0 741 168 B1

(12) **EUROPEAN PATENT SPECIFICATION**

(45) Date of publication and mention of the grant of the patent:
**16.06.1999 Bulletin 1999/24**

(51) Int Cl.[6]: **C09B 49/00**

(21) Application number: **96810271.5**

(22) Date of filing: **29.04.1996**

(54) **Sulphur dyes**

Schwefelfarbstoffe

Colorants au soufre

(84) Designated Contracting States:
**BE CH DE ES FR GB IT LI PT**

(30) Priority: **03.05.1995 US 434422**
**08.02.1996 US 598759**

(43) Date of publication of application:
**06.11.1996 Bulletin 1996/45**

(73) Proprietor: **Clariant Finance (BVI) Limited**
**Road Town, Tortola (VG)**

(72) Inventors:
- **Cote, Philip N.**
  **Charlotte, NC 28269 (US)**
- **Domingo, Manuel Jose**
  **08025 Barcelona (ES)**
- **Lan, Xiangfu**
  **Charlotte, NC 28269 (US)**
- **Shakhnovich, Alex I.**
  **Guilderland, NY 12084 (US)**

(74) Representative: **D'haemer, Jan Constant et al**
**Clariant International Ltd.,**
**Rothausstrasse 61**
**4132 Muttenz 1 (CH)**

(56) References cited:
**WO-A-93/07221**
**FR-A- 2 204 663**
**GB-A- 2 255 981**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 741 168 B1

## Description

This invention relates to sulphur dyes, their manufacture and use.

Sulphur dyes represent a general class of dyes having a long history. They are generally prepared from aromatic intermediates or starting materials which are reacted with a sulphur compound in a process generally viewed as involving both coupling and thionation. In earlier times, the dyes were made from relatively complex materials, including natural materials, whose chemical structure was often not precisely known. In more modern times, chemicals of discrete and known structures are used as starting materials. However, in either case, the structures of the resulting sulphur dyes are still seldom exactly known, and probably often involve variable and complex mixtures. As a result, sulphur dyes are generally described in the Colour Index, the authoritative work on dyes generally, by their starting materials, conditions of manufacture and a few fundamental properties such as colour and solubility. Given this background, the successful improvement and modification of sulphur dyes has been typically a matter of trial and error.

The aromatic intermediates (starting materials) used in making sulphur dyes can, for purposes of this invention, be described as relatively common aromatic compounds, such as benzene, naphthalene, biphenyl, diphenylamine, azobenzene and the like which bear at least one nitro, nitroso, amino, substituted amino, or hydroxy group. The Colour Index also has classified these intermediates to include: 1) Mononuclear Benzenoid Amino and Nitro Compounds; 2) Binuclear Benzenoid Amino and Nitro Compounds; 3) Substituted Phenols; 4) Substituted Naphthalenes; 5) Polycyclic Compounds; 6) Indophenols; and 7) Acridine, Azine, Oxazone and Thiazone Compounds. One or more such intermediates, which may be from the same or different intermediate classification, may be used in making a single dye product and other chemical intermediates, not fitting the above definition, are occasionally used in combination with such intermediates.

In preparation of sulphur dyes, the sulphur compound used may be sulphur itself, but the sulphur compound is more typically a polysulphide, e.g. sodium polysulphide. Other sulphur compounds providing a source of sulphur may also be used, such as sodium sulphide.

Sulphur dyes may be made by processes which have been divided into well-recognized categories such as sulphur bake, polysulphide bake, fluid polysulphide melt and solvent melt. In all these process categories the basic reaction of the intermediate(s) with the sulphur compound is carried out. The fluid polysulphide melt reaction, for example, involves forming a coupling mass by initial reaction of the intermediate(s) and sulphur compound and heating the coupling mass under reflux or pressure in a closed vessel to effect thionation. Such process is widely used in making many sulphur dyes, including the most commonly used sulphur dye known as C.I. Sulphur Black 1 (C.I. No. 53185, the solubilized form upon reaction with sodium bisulphite being C.I. No. 53186). The processes may vary in a number of respects as is well-known including work up after formation of the crude thionation product. Hence, presscakes may be formed from the crude product after different treatments of the crude products and the presscakes handled differently depending on product forms which can include powders, pastes, grains and liquids including aqueous solutions. Sulphur dyes commonly exist in two well-known forms; one in which the dye exhibits its colour (oxidized form) and one in which it is of lesser colour or colourless (reduced or leuco form), the reduced form being returned to the colour form by oxidation and the reduced form being produced by chemical reduction of the colour form. Since the dyes can be sold and used in either form, further reaction in work up of the crude thionation product may be carried out to obtain the desired product form. Final products are more usually the reduced form.

In general, compositions used as dyes, including sulphur dye compositions, must satisfy a number of criteria and do so to varying extents, hence creating a continuing interest in new dyes, including new sulphur dyes. Among the criteria of interest are the effects of a dye upon the substrate it is used to dye. Sulphur dyes, for example, are well-known to be inclined to weaken fabrics, an effect called "tendering". While this effect varies depending upon the particular sulphur dye, it is particularly significant with a number of sulphur dyes of varying colour and chemical compositions. Whether or not tendering is experienced more with dyes of darker shades, or prepared from particular intermediates is unclear. However, it is caused to a high level by most black dyes, such as those prepared from 2,4-dinitrophenol and its equivalent intermediates, and is distinctly and disturbingly high in the case of the most widely used sulphur dye, i.e. C.I. Sulphur Black 1, the use of which would be greater but for its tendering effect.

It is known in the art, e.g. from GB-A 2 201 165 , 2 255 981 and 2 273 103 and WO-A 93/07221 to employ reducing sugars for reducing a sulphur dye to its corresponding leuco form. According to WO-A 93/07221 such a reduction reaction, in particular when followed by a reoxidation, may lead to a desulphurization of the dye, which may result in some reduction of the tendering effect on the substrate. It has now been found that by substantial reaction of the below defined sulphur dyes or intermediates with certain reactants as defined below, there may, however, be achieved a substantial reduction of the tendering effect on the fibre, without substantially impairing the typical sulphur dye character of the dyes and their corresponding tinctorial and fastness properties.

An object of the invention is to provide new sulphur dye compositions. Another object is to provide sulphur dye compositions with reduced tendering effects. A further objective is to reduce the tendering effects of black sulphur dyes including particularly those of the character of C.I. Sulphur Black 1.

In FR-A 2204663 there is disclosed a process for dyeing or printing with vat dyes or sulphur dyes, wherein benzoquinone or naphthoquinone or alkylated, alkoxylated, halogenated or hydroxylated derivatives thereof are employed as vatting catalysts for the reduction of the vat dyes or sulphur dyes in order to improve the dyeing yield. This FR-A 2204663 thus relates to a solution of the problem of increasing the dyeing yield on the substrate by means of a vatting catalyst, which is substantially different and distinct from a reactive modification of the dye in order to reduce its tendering effect on the substrate.

BRIEF DESCRIPTION OF THE INVENTION

In accordance with the present invention, new sulphur dye preparations, which may be in oxidized or reduced form, are those which comprise in their preparation at least one sulphur dye intermediate of the formula (I):

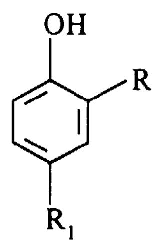

(I),

wherein R and $R_1$ are independently nitro, nitroso or amino, and which have reactively combined therein at least one modifying agent selected from the group consisting of: (A) an aldehyde of suitable reactivity; (B) urea; (C) a benzoquinone or naphthoquinone; (D) monoethanolamine; and a reaction product of (A), (B), (C) or (D).

By "reaction product of (A), (B), (C) or (D)" is meant, in particular, a product formed by the decomposition of (A), (B), (C) or (D) or by their reaction with one another under the reaction conditions.

The invention also provides processes for the preparation of the new sulphur dyes of the invention, in particular, processes which comprise subjecting a mixture of a sulphur compound and a sulphur dye intermediate of Formula (I), or a product of reacting such a mixture, to elevated temperature conditions in the presence of a modifying agent (A), (B), (C) or (D). One preferred process, herein Process X, generally involves reacting a modifying agent (A), (B), (C) or (D), above, or combination thereof, during the preparation of the sulphur dye by reaction of a sulphur compound and sulphur dye intermediate such that the desired amount of modifying agent or reaction product thereof is reactively combined during the process.

In another such process, herein Process Y, an already prepared sulphur dye, after completion of the thionation, is reacted with a modifying agent (A), (C) or (D), or combination thereof or reaction product thereof.

Preferred embodiments of the new sulphur dyes of the invention involve those substantially having the characteristics of known sulphur dyes which have a tendering effect on a substrate on which they are dyed, but which have less tendering effect than the similar dyes prepared without the modifying agent used in the invention.

The invention also provides a process for the colouring of cellulosic substrates and other substrates colourable with sulphur dyes, said process comprising colouring the substrate with a sulphur dye of the invention. Also provided are the resulting dyed substrates.

DETAILED DESCRIPTION OF INVENTION

The present invention provides new sulphur dyes prepared by reacting a sulphur compound (providing a source of sulphur for sulphur dye preparations) and at least one sulphur dye intermediate (starting material) of the formula (I):

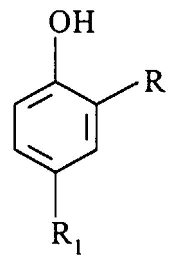

(I),

wherein R and $R_1$ are independently nitro, nitroso or amino, said new sulphur dyes being essentially reactively modified sulphur dyes by reason of including in their preparation at least one modifying agent selected from the group consisting of (A) an aldehyde of suitable reactivity; (B) urea; (C) a benzoquinone or naphthoquinone and (D) monoethanolamine.

New, modified sulphur dyes in accord with the invention may be also prepared from already prepared sulphur dyes, wherein the desired thionation in its preparation has been completed, by combining such a prepared sulphur dye with at least one aldehyde (A), benzoquinone or naphthoquinone (C) or monoethanolamine (D) modifying agent, under such conditions that the modifying agent undergoes a chemical reaction, more preferably a chemical reaction with the prepared sulphur dye. Hence, an aldehyde (A), benzoquinone, naphthoquinone or monoethanolamine may be used to form the new sulphur dyes at any time during or after the preparation of a sulphur dye.

Thus, a modified sulphur dye according to this invention is a sulphur dye which differs from an otherwise identically producible sulphur dye essentially by virtue of a modifying agent, (A), (B), (C) or (D) having been used in its preparation in an amount effective to produce a dye having reduced tendering properties as compared with the otherwise identically producible sulphur dye.

When the modifying agent is (B), i.e. urea, it will be included in the sulphur dye preparation before completion of the desired thionation reaction, preferably in good time to permit the urea to react, more preferably to be reactively combined in the sulphur dye product formed upon completion of the thionation. However, the modifying agents may generally be added for reaction in different stages or at different times consistent with the foregoing. For example, urea (B) may be added during the sulphur dye preparation and the resulting completely thionated, urea modified sulphur dye further treated with an aldehyde (A) or benzoquinone or naphthoquinone (C) modifying agent. Or an aldehyde (A) or a benzoquinone or naphthoquinone (C) may be included during the sulphur dye preparation reaction and the resulting product upon completion of the desired thionation may be then further reacted with the same or different aldehyde(s) (A) or benzoquinone(s) or naphthoquinone(s) (C).

In general, the preferred modifying agent is a combination of one or more aldehydes (A) and urea (B) that is included in the sulphur dye preparation process. More preferably the combination is glyoxal and/or glyoxylic acid and urea.

The particularly preferred sulphur dye intermediate of the formula (I) is 2,4-dinitrophenol.

When the modifying agent comprises an aldehyde (A), it may be an organic compound bearing one or more aldehyde groups, and may be aromatic, araliphatic or aliphatic, in the latter case cyclic or acyclic, saturated or unsaturated, branched or straight chain or a corresponding compound which forms an aldehyde (A) after addition to the reaction mixture. Also for purposes of definition herein, an aldehyde, other than formaldehyde, is a chemical compound bearing at least one -CHO group linked to the balance of the compound by a carbon-to-carbon bond. The aldehyde compounds may bear other substituents in addition to the aldehyde groups. Such substituents especially include hydroxy, carboxy and halo, e.g. fluoro, chloro and bromo, and $C_{1-4}$-alkyl substituents on cyclic aldehydes. Other substituents of interest include nitro, amino, nitroso, imine, substituted amino and other nitrogen containing substituents. Cyclic aldehydes are preferably homocyclic, i.e. non-heterocyclic compounds. Where the aldehyde (A) is aliphatic it is either further unsubstituted or may bear one substituent selected from the above, in particular -OH, -Cl or carboxy or a nitrogen-containing substituent (e.g. -CN or $-CONH_2$). Simple aliphatic acyclic aldehydes conforming to the formula $H(CH_2)_x$-CHO wherein x is preferably 0 to 4 may be used and introduced in liquid or gaseous form. Formaldehyde, for example, may be introduced as a gas or in solution as formalin. Acyclic compounds bearing two aldehyde groups preferably conform to the formula $OHC-(CH_2)_x-CHO$ wherein x is preferably 0 to 4, more preferably 0, 2, 3 or 4, e.g. glyoxal and malonaldehyde. Glyoxal, the dialdehyde in which x is 0, is a most preferred aldehyde (A). Unsaturated acyclic dialdehydes such as glutaconaldehyde may also be used and included among the preferred aldehydes (A). Another group of preferred aldehydes (A) include those conforming to the formula $OHC-(CH_2)_x-COOH$ wherein x is as above defined. Glyoxylic acid, the acid/aldehyde of such formula wherein x is 0, is also a most preferred aldehyde (A). Still another group of preferred aldehydes (A) include those conforming to the formula $OHC-(CH_2)_x-CH_2OH$ wherein x is as above defined. Hydroxyacetaldehyde, the alcohol/aldehyde of this latter formula wherein x is 0, is also a preferred aldehyde (A), such compound being generally available in aqueous solution in equilibrium with its dimer form. A further

group of preferred aldehydes (A) include those conforming to the formula OHC-$(CH_2)_x$-$CH_2Cl$ wherein x is as above defined. Chloroacetaldehyde, the chloroaldehyde of this latter formula wherein x is 0, is also a preferred aldehyde (A). Cyclic aldehydes may be saturated or partially or fully unsaturated and may be monocyclic or polycyclic, but are preferably monocyclic or bicyclic, more preferably monocyclic. Examples of aromatic aldehydes (A) include benzene substituted by one or more aldehyde groups such as benzaldehyde and salicylaldehyde. Preferably, the benzene ring is disubstituted by an aldehyde group, usually -CHO, such as the compounds phthalaldehyde and p-benzenedialdehyde.

The modifying agent may be added to the reaction mixture or reactants as such or may be formed in situ. Aldehyde molecules particularly tend to form compounds with each other or other compounds that readily liberate or regenerate the aldehyde form or do so under the process conditions used in carrying out the invention. Such compounds may be used in the invention to generate an aldehyde in situ for purposes of carrying out the invention. Hence, it is well known that aldehydes form with each other dimers, trimers and other polymeric forms, linear and cyclic, which are useful as aldehydes by being a source thereof. Paraformaldehyde, for example, is a well known polymeric form of formaldehyde that liberates formaldehyde upon heating. Aldehydes also form products with other type compounds, such as addition products, which liberate or regenerate the aldehyde under the reaction conditions employed in carrying out the invention. Well known examples of aldehyde addition products which liberate aldehydes under basic conditions are the sodium bisulphite aldehyde addition products.

When the modifying agent is or involves a quinone (C), it is preferably a 1,2- or 1,4-benzoquinone or 1,2- or 1,4-naphthoquinone, more preferably a 1,4-benzoquinone or 1,4-naphthoquinone, and still more preferably a 1,4-benzoquinone. Such quinone modifying agents may be substituted by one or more of a variety of substituents, in particular by one or more $C_{1-4}$-alkyl (eg. methyl), $C_{1-4}$-alkoxy (eg. methoxy), hydroxy and halo (fluoro, chloro or bromo) groups, or combinations thereof. The substituent(s) may be on the quinone ring or, in the case of naphthoquinone, also on the fused benzene ring portion. The preferred such quinones are either unsubstituted or substituted by halo substituents, especially chloro. Examples of such halo substituted compounds are 2,3,5,6-tetrachloro-1,4-benzoquinone and 2,3-dihalo1,4-naphthoquinone.

The modifying agent may be employed in widely varying amounts including amounts which are in excess of those which can be reactively combined into the final product. The amount of modifying agent introduced into the reaction may be expressed as a weight percent of the total weight of the modified sulphur dye product (dry solids content). In general, at least two weight percent of modifying agent will be employed and reacted in order to effect a desired modification of the preparation. As a practical matter, the amount of modifying agent (A), (B) or (C) or any combination thereof employed and consumed in the reaction product will represent from 2 to 30 percent by weight of the modified sulphur dye and the amount will preferably range from 4 to 25 percent by weight, more preferably from 6 to 20 percent by weight. The amount of modifying agent (D), when used alone, will range from 2 to 35 %, preferably 5 to 25 %, more preferably 7 to 20 %. When modifying agent (D) is used in combination with (A), (B) or (C) or any combination thereof, the weight of the total combination is generally in the range 2 to 50 %, preferably 10 to 40 %, based on the dry weight of modified sulphur dye product.

The preferred modifying agents are aldehydes (A) when used alone or in combination with another type modifying agent. In a particularly preferred embodiment, the modifying agent is a combination of an aldehyde modifying agent (A) and urea (B), preferably in a mol ratio of aldehyde (A) to urea (B) of 5:1 to 1:5, more preferably 4:1 to 1:5, more preferably 4:1 to 1:4, and most preferably 3:1 to 1:3. One preferred combination involves: as (A) glyoxal, glyoxylic acid or combinations thereof; and (B) urea.

Another preferred combination is hydroxyacetaldehyde (or the dimer thereof) and urea. The particularly preferred combination is a dialdehyde and urea, especially glyoxal and urea.

When monoethanolamine (D) is used in combination with modifying agent (A), (B) or (C) or any combination thereof, particularly with urea and/or glyoxal, as is preferred for such combinations, the ratio of mols of monoethanolamine to total mols of other modifying agents is preferably in the range 3:1 to 1:4, more preferably 2:1 to 1:3.

The present invention is applicable to sulphur dyes prepared from one or more intermediates which are substantially all of the type of formula (I) and to sulphur dyes prepared from combinations of sulphur dye intermediates in which one or more are a compound of the formula (I) and one or more intermediates are not of the type of formula (I). The intermediates of the type of formula (I) may constitute as little as 20 mol percent of all sulphur dye intermediates in the preparation. More suitably, intermediates of formula (I) constitute at least 40 weight percent, preferably at least 50 weight percent, of all sulphur dye intermediates in the preparation. The intermediates of the formula (I) may be combined with a host of other sulphur dye intermediates to form new, modified sulphur dyes in accord with the invention. Such other intermediates of particular interest include those aromatic compounds which have been combined with the intermediates of the formula (I) in forming black dyes. Representative of such other dye intermediates forming black dyes with the intermediates of formula (I) are picric acid, picramic acid, p-aminophenol and p-(2,4-dinitroanilino)phenol. Preferably, in these combinations, the intermediate of the formula (I), eg. 2,4-dinitrophenol, will be 50 to 90 %, more preferably 60 to 90 %, by weight of the combination and the other intermediate(s) will constitute 10 to 50 %, more preferably 10-40 %, by weight of the combination. Sulphur dyes prepared from one or more intermediates which are

substantially only of the type of formula (I) are of particular interest.

Specific, representative intermediate compositions involving one or more intermediates and of particular interest for modification in accord with the invention include those set forth below by Colour Index identification and colour(s) commonly obtained therefrom.

| Composition | Colour(s) | C.I. Index |
|---|---|---|
| 2,4-dinitrophenol | green to bluish black | C.I. Sulphur Black 1 |
| 2,4-dinitrophenol and picric acid and/or picramic acid | bluish black | C.I. Sulphur Black 2 |
| 2,4-dinitrophenol and p-(2,4-dinitroanilino)-phenol | bluish black | C.I. Sulphur Black 12 |
| 2,4-dinitrophenol and p-aminophenol | greenish black | C.I. Sulphur Black 10 |

The preparation of sulphur dyes is well-known and generally conducted at elevated temperatures over varying periods of time. It is well-known in the sulphur dye art that temperatures and times of reaction as well as other parameters directly influence the product to be obtained including such basic characteristics as colour and shade, and even the structure of these complex dyes. It is well within the knowledge of those skilled in the art to select the conditions for particular dye objectives. In general, the preparation of sulphur dyes involves the reaction of one or more sulphur dye intermediates (as starting material) in an overall process involving a progression of intermediary products in a pathway culminating in the final desired sulphur dye. While little is known with certainty concerning the exact nature or number of intermediary products or the number of stages which may be identified in the overall process, it is recognized that the initial contact in melt or solution of the starting materials results in an exothermic reaction, called "coupling", which subsides and results in intermediary products referred to as the "coupling mass". This mass, with or without separation and/or adjustment, is then driven by external heating in a reaction referred to as "thionation" until the desired sulphur dye is formed as a crude product. The modification of sulphur dyes in accord with the invention may be effected by incorporating the modifying agents into the established procedures for preparation of sulphur dyes, including the various process types known as the sulphur bake, polysulphide bake, fluid polysulphide melt and solvent melt, and carrying out such processes essentially in the conventional ways, such as done in preparing particular products.

Hence, the new sulphur dyes of the invention may be prepared by introduction of the modifying agent into the preparation processes in a variety of ways and at different time points.

According to one type of procedure, the sulphur dyes of the invention may be prepared by introduction of the modifying agent into the reaction mixture from which the crude sulphur dye is prepared. This may be done at any time from the beginning of the process up to near the end of the reaction in the thionation stage, preferably so that time is allowed for the modifying agent to react. Hence, the modifying agent may be added to the starting materials or to any of the variety of intermediary products or reaction mixtures formed in the pathway leading to the final crude sulphur dye product. Since the overall process may be viewed as staged, the modifying agent may be introduced prior to or during any stage, preferably so that time for reaction of the desired amount of modifying agent is allowed prior to formation of the crude product upon completion of the thionation reaction. The sulphur dyes of the invention are desirably prepared with the modifying agent being added after reaction and conversion of the sulphur dye intermediate (s) has commenced, such as in the coupling reaction or to the coupling mass. Preferably, the new sulphur dyes are prepared in a fluid polysulphide melt process as is commonly used for many black dyes including C.I. Sulphur Black 1.

For example, a typical fluid polysulphide melt process involves reactions at elevated temperatures in the presence of water under alkaline conditions and typically begins by adding the sulphur dye intermediate(s) to a concentrated aqueous polysulphide solution whereby an exothermic reaction called "coupling" takes place, and upon completion of the desired coupling a coupling mass is created. This may be viewed as a first stage. The coupling mass (reaction product) is then heated in a second stage, optionally after dilution with water and transfer to another vessel, to effect the thionation reaction. In carrying out the invention in a fluid melt type process, the modifying agent may be introduced at any time prior to the coupling reaction, such as by combining with one or more of the starting materials prior to the exothermic coupling reaction, or added during the coupling reaction to form the coupling mass, or added to the coupling mass and even during the thionation. Desirably, the modifying agent is added to the coupling mass prior to or upon commencement of the thionation reaction.

In the fluid melt process the exothermic coupling reaction to form the coupling mass is generally allowed to be carried out at regulated elevated temperatures which are usually in the range of 70°C to 200°C, more typically 90°C to 120°C. Times may vary widely from 15 minutes to 5 hours, more usually from 20 minutes to 3 hours, depending

mainly on the product sought and batch size. The reaction may be conducted at atmospheric pressure or above, and hence may be carried out under reflux conditions or under pressure in a sealed reactor. The reaction is typically initiated by controlled combining of the dye intermediate(s) with the sulphur compound, e.g. by slow or staged addition of the intermediate(s) to the sulphur compound.

Following the completion of the mixing of all of the sulphur compound and sulphur dye intermediate to be used in the reaction, the point in time at which the temperature of the exothermic reaction begins to recede can be viewed as approximately the beginning of the period of complete formation of the intermediary products representing the coupling mass and the point at which the reaction mixture would return to room temperature on its own can be viewed as the end of the period, such period herein being "the coupling mass period" and the reaction mixture and/or its intermediary products as they exist substantially during the coupling mass period and thereafter in the substantial absence of the heat required to drive the thionation reaction can be viewed as the coupling mass. A coupling mass can also be viewed herein as formed when treated as such by the particular process procedure or operator as indicated for example by transfer of the initial exothermic reaction mass or products to a different reaction vessel or a change in media or temperature conditions for purposes of effecting the thionation reaction or stage which leads to the crude sulphur dye product. Preferably, the modifying agent, especially one comprising a modifying agent (A), (B), (C) or combination thereof is added at or before the point in time which is eighty percent (80 %) through the reaction time period between the first application of heat to drive the reaction after formation of the coupling mass and the cessation of the application of heating at the completion of thionation, i.e. formation of the final crude sulphur dye product, more preferably at or before fifty percent of the time in such period has passed. Since particular sulphur dyes are usually prepared according to set procedures including thionation time to provide a number of desired properties, it is generally undesirable to extend the thionation reaction merely to reactively combine the modifying agent when the invention is used to modify an established sulphur dye, such as to modify tendering properties while substantially retaining other desired properties. Hence, the desirable point of addition of the modifying agent is to the coupling mass and particularly and conveniently to the final coupling mass on completion of the coupling reaction when transfer of the mass or other condition changes are often made to begin the thionation. It is therefore apparent that in the most preferred embodiments the period for the modifying agent to act on the reaction mass and, preferably, undergo a chemical reaction will at least substantially overlap or take place during the initial portions of the thionation reaction and, when the modifing agent is added to the final coupling, will take place beginning essentially from the start of the thionation stage and will essentially be carried out entirely during the thionation stage.

Following the formation of the coupling mass, as in the fluid melt process, the thionation reaction is conducted. The coupling mass may be diluted with water before the thionation reaction is carried out. While the modifying compound may be added during the thionation reaction, it is most preferably added to the coupling mass from the coupling reaction and just prior to the thionation reaction, or soon after the thionation reaction has commenced. Hence, the modifying compound, or the balance of the same to the desired total amount not added for or during the coupling reaction, may be added to the coupling mass or may be added to dilution water or to the water diluted coupling mass when the coupling is to be diluted with water for the thionation. However, it will be understood that many standard fluid melt processes are carried out in a single reactor essentially without interruption or change between the formation of the coupling mass and commencement of the thionation. In such cases the modifying agent is preferably simply added at about the time of formation of the coupling mass. The thionation reaction is then carried out in the conventional manner as indicated for the particular sulphur dye being sought. The conditions of thionation, particularly in terms of temperature and time, may vary widely depending upon the properties of the dye. In the fluid melt process the temperature usually ranges from about 90°C to 300°C, more usually 95°C to 200°C and often 100°C to 150°C. Times may vary from only a few hours, e.g. 3 hours, to several days, e.g. 5 days, and are usually between 5 hours and 90 hours. Time is considerably influenced by batch size as is well-known, as well as dye objectives. The thionation reaction may be also carried out under reflux or elevated pressures, but is typically carried out under elevated pressures of up to 100 psig (pe 6.9 bar), more usually 20 to 100 psig (pe 1.38 to 6.9 bar), e.g. 45 to 80 psig (pe 3.105 to 5.52 bar).

Some modifying agents, such as formaldehyde and glyoxal, may be undesirably volatile under the reaction conditions under which they are to be reacted. When the more volatile agents are used, it is preferred to add them under conditions in which the volatility will be controlled. Thus, agents such as formaldehyde and glyoxal are more conveniently added when the reaction stage is to be conducted under sufficient pressure to control the volatility.

According to another procedure, the modifying agent is added to the thionation reaction mixture after completion of the thionation reaction and the resulting mixture is heated to a temperature of at least 105°C, preferably at least 120°C, more preferably 125°C to 145°C. This procedure has been found to be particularly suitable when the modifying agent is monoethanolamine.

Various additives or non-aromatic reactants for particular purposes may also be present in either or both of the reaction mixtures for the coupling reaction and thionation reaction. Such materials are well-known and generally used in the particular recipe for particular dyes.

Upon completion of the thionation reaction in all processes for preparation of sulphur dyes, a crude sulphur

dye product is formed in which the sulphur dye may be considered to be of undesired purity and is often in both reduced and oxidized forms. This crude product can then be treated and worked up by a variety of procedures known in the art to obtain the desired final product. These procedures often include formation of a presscake as an intermediate product form of upgraded purity from which unreacted starting materials and side products are largely or wholly removed, typically by precipitation and filtering. In the simplest procedures, the crude product is subjected to air (aeration) or oxygen treatment to oxidize the portion of the product in reduced dye form and effect precipitation of a sulphur dye product mass from which the purified presscake can be recovered, e.g. by filtration of the precipitate. In another procedure, the crude product is subjected to acid precipitation using, for example, sulphuric acid, and a purified and oxidized presscake (which may contain -SH groups) obtained from the resulting precipitate, a procedure which is preferred when the crude product has been produced by heating an already formed thionation product with monoethanolamine as described above. In still another procedure, the crude product is both desulphurized and aerated (oxidized) to obtain the presscake. Desulphurized sulphur dyes are sulphur dyes treated post-preparation (after thionation) to modify and/or even eliminate some sulphur in the sulphur linkages which are internally present in the sulphur dye, and their preparation is well-known. Desulphurization is generally viewed as modifying, usually by shortening the polysulphide linkages created in the complex sulphur dye structures by the thionation reaction. A preferred process for desulphurization involves treating the dye with glucose in an alkali metal hydroxide solution, e.g. an aqueous solution of sodium hydroxide, at temperatures of from 75°C to 105°C, preferably 85°C to 100°C.

The presscake is generally used to produce final product forms. If the modified sulphur dye is to be sold and used in solubilized, reduced dye forms, the presscake can be subjected to any one of a variety of conventional treatments to obtain such final product forms.

In accord with the invention, it has been found that the new sulphur dyes of the invention may also be prepared by reaction of a prepared sulphur dye, i.e. after completion of thionation resulting in the crude sulphur dye preparation, by desulphurizing the sulphur dye and treating the desulphurized dye with an aldehyde modifying agent (A) or precursor or with a modifying agent (C) or (D). Such treatment may be carried out at any time such as with a desulphurized crude product or desulphurized oxidized presscake, and other desulphurized forms. For example, the crude preparation may be oxidized to produce the dye substantially in oxidized form, then desulphurized and then reacted, optionally after presscake formation, with the modifying agent or the crude dye desulphurized and then reacted with the modifying agent, followed by oxidation and formation of the presscake. Or the dye may be desulphurized, oxidized and then reacted, optionally after presscake formation, with the modifying agent. Such modifying reaction may be generally carried out under varying conditions, but preferably is conducted by combining the desulphurized sulphur dye with water and the modifying compound and heating the mixture at 50°C to 150°C, more preferably 60°C to 120°C, most preferably 70°C to 110°C, until the desired amount of modifying agent is reactively combined with the dye. Reaction times may vary fairly widely and usually are in the range of 1 hour to 50 hours, more usually 2 to 40 hours, with batch size again influencing the time to desired results.

The new dyes of the invention have the character of sulphur dyes and are suitable for dyeing substrates that are dyeable with conventional sulphur dyes (e.g. cellulosic substrates or even polyamidic substrates) by any method conventionally suitable for conventional unmodified sulphur dyes, i.e. employing their leuco form (which can be produced by reducing the non-reduced form of the dye in a manner analogous to conventional reducing methods for the production of leuco sulphur dyes from conventional unmodified sulphur dyes, e.g. by reaction with an alkali metal sulphide or hydrosulphide, or with a non-sulphide reducing agent such as a reducing sugar or another non-sulphide reducing agent, preferably under alkaline conditions, suitably with heating e.g. to temperatures ≥ 60 °C), dyeing (e.g. under alkaline conditions, e.g. at pH ≥ 9, optionally with heating) and reoxidizing (e.g. under acidic to weakly basic conditions).

References herein to the Colour Index are to the Third Edition, 1971 (Vol. 4).

The following Examples will be understood to merely illustrate the invention.

The non-metric units employed in the following tests and examples are converted to metric units using the following conversion factors:

1 inch = 2.54 cm;
1 $ft^3$ (cu ft) = 0.028 $m^3$;
1 yard = 0.914 m;
1 opg (ounce per gallon) = 7.5 g/l;
1 psi (pound per square inch) = 69 mbar;
psig (pound per square inch, gauge) is the manometer pressure (i.e. the pressure "pe" in excess over the atmospheric pressure) in psi

and approximating, in order not to exceed four decimal places

Procedure A: Tendering Test

In the following examples, the tendering effect of synthesized dyes of the invention is measured for comparison against the tendering effect of standard or similar dyes which have been prepared in essentially the same manner, except that the modifying agent is omitted. Tendering is measured and determined by the recognized standard test procedure according to AATCC Test Method 26-1994:Aging of Sulphur-Dyed Textiles:Accelerated (AATCC Technical Manual, Vol. 70, 1995), an outline of which is as follows:

Apparatus

| | |
|---|---|
| Oven: | Fisher Scientific Isotemp Oven Model 630 G, with dimension: 19 in (= 48.2 cm) (width) × 17.5 in (= 44.4 cm) (height) × 15 in (= 38.1 cm) (depth), capacity = 2.886 cu ft (= 80808 $cm^3$). The oven is connected to a vent. |
| Glass tray for water: | 10.125 in (= 25.7175 cm) × 6.125 in (= 15.5575 cm) surface area = 62 $in^2$ (= 400 $cm^2$). |
| Rack: | A 4-row wooden rack with 2.5 inch (= 6.35 cm) distance between rows. Each row has 9 wood pins to hold pieces of cloth. The rack is placed in the oven with a distance of 3 inches (= 7.62 cm) to the top of the oven and with rows parallel to the back of the oven. The back and the front rows have a distance of 3 inches (= 7.62 cm) to the oven back and front wall, respectively. |

Materials

| | |
|---|---|
| Cloth: | The dyed cloth (cotton twill) is cut into 2 in (= 5.08 cm) × 6 in (= 15.24 cm) size of pieces. From each sample dyeing of 5 inch (= 12.7 cm) by 1 yard (= 914 cm), at least 16 pieces will be obtained, of which 8 will be hanged to be aged, 8 will be stored unaged.<br>Total weight of cloth to be aged: 25 g/cu ft × 2.886 cu ft (= 25 g/28000 $cm^3$ × 80808 $cm^3$) = 72 g |
| Water: | 100 g/cu ft × 2.886 cu ft (= 100 g/28000 $cm^3$ × 80808 $cm^3$) = 288.6 g. |

Procedure

1. Cut the dyed cloth into the desired size and weigh the cloth to obtain a total weight of 72 g for each oven (normally, 4 samples with 32 pieces are used, 3-6 dummy pieces need to be used to make up the weight.

2. Mount the cloth to the rack and place into the oven

3. Weigh 288.6 g of water into the tray. The tray is placed under the hanging cloth in the center.

4. The oven is pre-calibrated and pre-set to 135 ± 2°C. After the materials and water are in place, turn the oven heat on. Record the oven temperature and the temperature on the thermocouple thermometer (Cole-Parmer Digi-Sense) which is inserted from the vent to the center of the oven and the center of the cloth.

5. When the temperature reaches the desired temperature (it takes approximately 3 hours), continue heating for 6 hours.

6. At the end of the 6 hours, turn the oven heat off and take the rack out. Let it condition at laboratory environment for 16 hours, or overnight, before performing the breaking strength test.

Procedure for Tendering Test

1. The breaking strength (BS) test is performed on a tensile tester model Testometric 220D.

2. The breaking strength is tested on the unaged pieces of cloth and then totalled to give BS(unaged).

3. The breaking strength is tested on the aged and conditioned pieces of cloth and then totalled to give BS(aged).

4. Tendering is calculated as follows:

$$\frac{\text{BS(unaged) - BS(aged)}}{\text{BS unaged}} \times 100 = \text{tendering ( in \% )}$$

Except as noted in the following examples, the tendering tests in the examples are carried out as above described.

EXAMPLE 1

2,4-Dinitrochlorobenzene (100.5 g) is hydrolyzed with a mixture of 87 g of 50 % sodium hydroxide and 400 g water at 100°C for 1-1.5 h. The resulting 2,4-dinitrophenolate solution is slowly mixed hot over the course of 20 minutes with hot polysulphide solution, prepared in a 1000 ml vessel equipped with Dean-Stark trap by combining of 89 g of sodium sulphhydrate solution (45 %), 72 g sulphur and 57.2 g of 50 % aqueous sodium hydroxide. During mixing the reaction temperature is controlled at about 90-100°C by means of refluxing. An additional 50 g of hot water from washing the phenolate reaction vessel is then added, and the reaction mixture maintained at about 104-106°C for an additional 30 minutes with about 200 ml of water collected overhead. The resulting reaction mixture (coupling mass) at 90-95°C is then brought to 700 g by the addition of water and the mixture is transferred to a one liter stainless steel autoclave equipped with a stirrer. To this mixture, after cooling to 35°C, is added 28 g of 40 % glyoxal solution, the autoclave is sealed and heated for 12 h at 122°C.

After cooling and opening of the autoclave the reaction mixture is transferred to a heating beaker with a stirrer and aeration tube and heated to 65°C and at this temperature the air oxidation of the mixture is conducted during 2 h. Approximately at this time the spot test of the mixture on the plain filter paper shows a weakly bluish runout (oxidation complete). The pH of the mixture (approximately 8.5 - 9.0) is adjusted to 7.5 with 25 % sulphuric acid (approximately 25 g) and the mixture is immediately filtered under vacuum. The presscake weight is 190-210 g; solids content 57-63 %. After determination of the solids (20 g of presscake) the dye is solubilized by adding 74 g of the dye presscake (60 % solids) to a mixture of 30 g 50 % sodium hydroxide, 23.3 g of 45 % sodium sulphhydrate solution and 32.9 g water at 85°C. The resulting mixture is stirred at 105°C for 2 h. The total weight of the liquid dye is brought to 166.7 g by addition of water.

A dyebath is prepared by mixing 20 opg (= 150 g/l) of the above-prepared liquid dye, 6 opg (= 45 g/l) glucose/caustic sulphur dye reducing agent available from CLARIANT under the trade designation Reducer RDT, 6 opg (= 45 g/l) 50 % sodium hydroxide and 1 opg (= 7.5 g/l) of phosphate ester wetting agent available under the trade designation Penetrant EH and cotton twill is dyed by the pad-steam method. The dye is oxidized by the solution, containing 7.5 g/l acetic acid, 7.5 g/l of vanadium-catalyzed sodium bromate oxidizing agent available under the registered trademark DYETONE and 1.0 g/l of a scouring agent based on a sodium salt of an acrylic acid homopolymer which is available under the registered trademark SANDOPURE RSK. The fabric is submitted to the accelerated aging test at 135°C according to AATCC Test Method 26-1994 described above. The same fabric dyed with 20 opg (= 150 g/l) of the similar C.I. Sulphur Black 1 type dye prepared without the glyoxal is submitted to the same aging as a standard. After conditioning the samples at room temperature overnight the tensile strength of the cloth is determined by the tear tester. The tendering of the fabric dyed with the modified dye of the invention has only 45-55 % of the tendering caused by the similar C.I. Sulphur Black 1 dye.

EXAMPLE 2

A wet desulphurized C.I. Sulphur Black 1 presscake (100.3 g; 27.56 % solids) prepared in the manner described in Step 1 of Example 14 hereinafter is stirred for 5 h at 80°C. with 11.0 g of 40 % glyoxal solution and 300 ml water. The dye is filtered off and solubilized by mixing with 41 g of 50 % sodium hydroxide, 7 g glucose and 12 g water, giving 160 g of liquid dye which is used to dye cotton twill.

The dyebath is prepared by mixing 20 opg (= 150 g/l) of the liquid dye, 12 opg (= 90 g/l) Reducer RDT, 12 opg (= 90 g/l) 50 % sodium hydroxide and 1 opg (= 7.5 g/l) Penetrant EH and 4 opg (= 30 g/l) of lignosulphonate dispersing agent available under the registered trademark REAX-85A. The cotton twill is dyed by the pad-steam method. The dye is oxidized by the solution, containing 7.5 g/l acetic acid, 7.5 g/l DYETONE and 1.0 g/l of SANDOPURE RSK. The resulting dyed fabric is submitted to the accelerated aging test at 135°C according to AATCC Test Method 26-1994. The same fabric dyed with 20 opg (= 150 g/l) of Sandozol Black 4G-RDT (a C.I. Leuco Sulphur Black 1

similarly prepared without glyoxal) is subjected to the same aging as a standard. After conditioning the samples at room temperature overnight the tensile strength of the cloth is determined by the tear tester. The tendering of the fabric dyed with the glyoxal-modified dye is 45-55 % of the tendering caused by the Sandozol Black 4G-RDT.

EXAMPLE 3

The procedure of Example 1 is repeated except that, instead of glyoxal, 11.2 g of urea is added to the coupling mass followed by heating at 120-125°C for 8 hours to complete the thionation reaction. The tendering of the fabric dyed with the resulting dye is 42-68 % compared to about 80 % tendering caused by the similar C.I. Sulphur Black 1 type dye standard prepared without the urea.

EXAMPLE 4

The procedure of Example 1 is repeated except that, instead of glyoxal alone, 32.2 g. of 40 % aqueous solution of glyoxal and 11.2 g. of urea are separately added followed by heating at 120-124°C for 8 hours to complete the thionation reaction (final pressure 60 psig = pe 4.14 bar). The tendering of the fabric dyed with the resulting dye is 34-64 %, 22-46 % and 36-42 % compared to about 80 %, 75-80 % and 73-80 % tendering, respectively, caused by the similar C.I. Sulphur Black 1 type standard dye prepared without the glyoxal and urea.

EXAMPLE 5

The procedure of Example 2 is repeated except that, instead of glyoxal, 11.9 g of formaldehyde in the form of 37 % aqueous solution of formalin is added to the wet desulphurized presscake followed by heating at 80°C for 5 hours. The tendering of the fabrics dyed with the resulting dye is 52 % and 47 % compared to a tendering of 78 % for the standard dye.

EXAMPLE 6

The procedure of Example 2 is repeated except that, instead of glyoxal, 12 g of pentanedial is added to the desulphurized presscake followed by heating at 80°C for 5 hours. The tendering of the fabric dyed with the resulting dye is 48 % compared to a tendering of 74 % for the standard dye.

EXAMPLE 7

The procedure of Example 2 is repeated except that, instead of glyoxal, 12 g of p-benzenedialdehyde is added to the desulphurized presscake followed by heating at 80°C for 5 hours. The tendering of the fabric dyed with the resulting dye is 49 % compared to a tendering of 77 % for the standard dye.

EXAMPLE 8

The procedure of Example 2 is repeated except that, instead of glyoxal, 2.8 g of butyraldehyde is added to the desulphurized presscake followed by heating at 80°C for 4 hours. The tendering of the fabric dyed with the resulting dye is 53 % compared to a tendering of 77 % for the standard dye.

EXAMPLE 8A

Example 8 is repeated with one-half the amount of butyraldehyde. The tendering is 57 % compared to 77 % for the standard.

EXAMPLE 9

The procedure of Example 2 is again repeated except that, instead of glyoxal, 2.8 g of o-hydroxybenzaldehyde (salicylaldehyde) is added to the desulphurized presscake followed by heating at 80°C for 4 hours. The tendering of the fabric dyed with the resulting dye is 34 % compared to a tendering of 82 % for the standard dye.

EXAMPLE 9A

Example 9 is repeated with one-half the amount of o-hydroxybenzaldehyde. The tendering is 43 % compared

to 82 % for the standard.

EXAMPLE 10

The procedure of Example 2 is repeated except that, instead of glyoxal, 5.6 g of a 50 % aqueous solution of $ClCH_2CHO$ is added to the desulphurized presscake followed by heating at 80°C for 4 hours. The tendering of the fabric dyed with the resulting dye is 47 % compared to a tendering of 80 % for the standard dye.

EXAMPLE 10A

Example 10 is repeated with one-half the amount of the $ClCH_2CHO$. The tendering is 54 % compared to 80 % for the standard.

EXAMPLE 11

The procedure of Example 2 is repeated except that, instead of glyoxal, 2.7 g of benzoquinone is added to the wet desulphurized presscake followed by heating at 80°C for 5 hours. The tendering of fabrics dyed with the resulting dye averages about 45 % compared to an average tendering of 78 % for the standard dye.

EXAMPLE 12

The procedure of Example 2 is repeated except that, instead of glyoxal, 2.7 g of 2,3,5,6-tetrachloro-1,4-benzoquinone is added to the wet desulphurized presscake followed by heating at 80°C for 5 hours. The tendering of fabrics dyed with the resulting dye averages about 48 % compared to an average tendering of 77 % for the standard dye.

EXAMPLE 13

The procedure of Example 2 is repeated except that, instead of glyoxal, 2.7 g of 2,3-dichloro-1,4-naphthoquinone is added to the wet desulphurized presscake followed by heating at 80°C for 5 hours. The tendering of fabrics dyed with the resulting dye averages about 42.5 % compared to an average tendering of 78 % for the standard dye.

EXAMPLE 14

Post Preparation Glyoxal Modification Of Desulphurized C.I. Sulphur Black 1

Step 1: Desulphurization

Seven grams of 50 % sodium hydroxide are added to 500 g of crude C.I. Sulphur Black 1 (prepared by fluid aqueous polysulphide melt from 2,4-dinitrophenol) and the mixture is heated to 50°C. At this point 36 g of dextrose are added, followed by dropwise addition of 116 g of 50 % NaOH during 1 hour. The reaction mixture is heated and stirred at 98°C for one hour, cooled to 25°C and the pH is adjusted to 9.8-9.9 with 140 g of 25 % sulphuric acid. The reaction mixture is aerated at 40°C, maintaining pH 9.8-9.9 by addition of 25 % sulphuric acid. Aeration time is about 9 hours. The reaction mixture, which has a clear bluish runout when spot tested on plain filter paper, is filtered and the precipitate is washed with water to give 134 g of wet desulphurized presscake (dry % = 29.25).

Step 2: Glyoxal Treatment of Desulphurized Presscake

100 g of wet desulphurized presscake from Step 1 (dry % = 29.25) is mixed with 300 g water, stirred for 5 min and 11 g of 40 % glyoxal solution are added all at once. The mixture is heated with stirring at 80°C during 4 hours and the treated dye is filtered off and washed with water. The weight of the dye presscake is 50 g (dry % = 60). The dye is solubilized by adding 20 g of 50 % sodium hydroxide solution and 16.3 g of 45 % sodium hydrosulphide solution and heating for 2 h at 105°C. The resulting dye is used to dye cotton twill at 20-24 opg (= 150-180 g/l) to give 85-95 % dyeings for comparison with cotton twill similarly dyed with Sodyesul Liquid Black 4G-CF, a C.I. Leuco Sulphur Black 1 similarly prepared without glyoxal and without desulphurization. The tendering is tested according to AATCC Test Method 26-1994.

For the standard Sodyesul Liquid Black 4G-CF the strength loss is about 75 %, whereas for the glyoxal-treated product the strength loss is 40 % at 85 % dyeing strength. The shade of the dyeing with the modified dye is within ± 0.3 unit of the standard.

EXAMPLE 15

700 g of a C.I. Sulphur Black 1 coupling mass prepared as in Example 1 are placed in a 1000 ml autoclave. Then 20.25 g of glyoxylic acid monohydrate and 11.2 g of urea are added to the coupling mass. The reaction vessel is sealed and heated 8 h at 122°C. The autoclave is cooled and opened and the reaction mixture is aerated at 65°C during 2 hours. At the end of the aeration the pH is 7.64, so no pH adjustment was needed. The dye precipitate is filtered off. The amount of presscake is 272.12 g having 51.55 % dry weight, or 140.3 g of the dry dye.

172.2 g of this presscake is mixed with 60 g of 50 % sodium hydroxide, 46.6 g of 45 % sodium hydrosulphide and 54.6 g of water and this mixture is heated at reflux with stirring for 2 hours. The dye solution weight is 333.4 g. This liquid dye at 20 opg (= 150 g/l) has a dye strength which is 85.4 % of the dye strength of a similarly formulated C.I. Sulphur Black 1 standard. The cotton twill cloth is dyed as in Example 1 with this dye at 25 opg (= 187.5 g/l) [96.3 % vs 20 opg (= 150 g/l)] and is submitted to the tendering test. The tendering is 23 % compared to 65 % for the standard C.I. Sulphur Black 1 dye at 20 opg (= 150 g/l).

EXAMPLE 16

Modification of C.I. Sulphur Black 10 Type

Into a 500 ml 5-neck flask, fitted with stirrer, condenser, thermometer, and heating mantle, are added 57.2 g of 50 % caustic soda and 89.0 g of 45 % sodium sulphhydrate and this mixture is heated with stirring to 70°C. To the mixture is added 72.0 g of sulphur followed by stirring at 70-80°C until the sulphur is in solution.

In a 1 liter autoclave vessel equipped with stirrer and thermometer are added 361.6 g of water, 47.6 g of 50 % caustic soda, 51.3 g of water-wet 2,4-dinitrophenol (89 %) and 27.0 g of para-aminophenol (100 %). The temperature rises to 32°C.

The hot polysulphide prepared above (at 70-80°C) is added to the autoclave with stirring. There is then added 32.4 g of 40 % glyoxal solution and 11.2 g of urea. The reaction mixture is allowed to heat up slowly to 120-124°C, and then held at 120-124°C for 14 hours. At the end of 14 hours, the autoclave is cooled to 0 psig ( pe 0 mbar) and room temperature. The contents of autoclave are transferred to a 3 liter beaker and set up for airing. Make volume up to approximately 1500 ml with water. Heat to 65-70°C and air at 65-70°C for 2 hours. Then pH is adjusted from 9.5-10.0 to 7.5-8.0 with 25 % sulphuric acid. Filter at 65-70°C. The presscake weighs 650-690 g at 25-29 % dry dye content.

334 g of the presscake (at 28 % dry) is then added to a mixture of 20 g of water, 36 g of 50 % caustic, and 62.4 g of 45 % sodium sulphhydrate at 85°C, and the resulting mixture is stirred at 105°C for 2 hours. The total weight of the liquid dye is 442 g. This liquid is then dyed as in Example 1 at 50 opg (= 37.5 g/l) yielding 86.4 % dye strength compared to a 91.5 % strength for a C.I. Sulphur Black 10 type standard similarly prepared without the glyoxal and used. The tendering is 57 % compared to 67 % for the standard Sulphur Black 10 dye used at 50 opg (= 37.5 g/l).

EXAMPLE 17

The procedure of Example 1 is repeated except that, instead of glyoxal alone, 32.2 g of 40 % aqueous solution of glyoxal and 20 g of monoethanolamine are separately added followed by heating at 120-124°C for 8 hours to complete the thionation reaction. The tendering of the fabric dyed with the resulting dye is 12.9 % compared to 69.6 % for the standard dye.

EXAMPLE 18

The procedure of Example 1 is repeated except that, instead of glyoxal alone, 32.2 g of 40 % aqueous solution of glyoxal and 10 g of monoethanolamine are separately added followed by heating at 120-124°C for 8 hours to complete the thionation reaction. The tendering of the fabric dyed with the resulting dye is 13.7 % compared to 54.9 % for the standard dye.

EXAMPLE 19

The procedure of Example 1 is repeated except that, instead of glyoxal alone, 32.2 g of 40 % aqueous solution of glyoxal, 11.2 g of urea, and 20 g of monoethanolamine are separately added followed by heating at 120-124°C for 8 hours to complete the thionation reaction. Half of the resulting dye presscake is solubilized as usual, and the other half with additional 7 g of triethanolamine. The tenderings of the fabric dyed with the resulting dyes are 7.8 % and 5.5 %, respectively, compared to 53.5 % for the standard dye.

EXAMPLE 20

The procedure of Example 1 is repeated except that, instead of glyoxal alone, 32.2 g of 40 % aqueous solution of glyoxal, 11.2 g of urea and 10 g of monoethanolamine are separately added followed by heating at 120-124°C for 8 hours to complete the thionation reaction. The tendering of the fabric dyed with the resulting dye is 4.6 % compared to 54.9 % for the standard dye.

EXAMPLE 21

The procedure of Example 1 is repeated except that, instead of glyoxal, 11.2 g of urea and 20 g of monoethanolamine are separately added followed by heating at 120-124°C for 8 hours to complete the thionation reaction. The tendering of the fabric dyed with the resulting dye is 7.5 % compared to 69.6 % for the standard dye.

EXAMPLE 22

In an autoclave equipped with a reflux condenser and pressure control device 50 g of water are mixed with 317 g of 43 % sodium sulphhydrate solution, 197 g of 50 % sodium hydroxide and 280 g of sulphur. The resulting mixture is stirred for five minutes at 40-50°C and another 100 g of 43 % sodium sulphhydrate solution are added to form a polysulphide slurry. In a separate vessel 320 g of 50 % sodium hydroxide solution are added over a period of one hour to a mixture of 700 g of water and 400 g of 2,4-dinitrochlorobenzene at 100°C. After heating for an additional thirty minutes, 15-20 % of the resulting hot 2,4-dinitrophenolate solution is added to the polysulphide slurry. After the resulting exothermic reaction is over, the remainder of the 2,4-dinitrophenolate solution is added to the polysulphide and water is distilled off until the reflux temperature reaches 116°C (about 1 to 1.5 hours). The resulting mixture is refluxed for an additional 30 minutes and then the autoclave is pressurized and heated until a gauge pressure of 1.6 $kg/cm^2$ (22 psig = pe 1.52 bar) and a temperature of 140°C are reached. The reaction mixture is maintained at this temperature for three hours and then cooled to 90°C, at which point the autoclave is opened and 150 g of water and 80 g of monoethanolamine are added. The autoclave is pressurized and heated until the gauge pressure reaches 2.2 $kg/cm^2$ (30 psig = pe 2.07 bar) and the temperature of the reaction mixture is approximately 138°C. By use of the pressure control device the pressure is maintained at 1.6-1.7 $kg/cm^2$ (= pe 1.52-1.61 bar) for an additional three hours, after which time the reaction mass is cooled to 100°C and 600 g of water at about 15-20°C are added followed by 40 g of 98 % sulphuric acid to precipitate the resulting modified sulphur dye. The precipitate is filtered and the wet presscake, weighing approximately 1055 g, is mixed with 150 g of 50 % sodium hydroxide, 300 g of water and 80 g of 43 % sodium sulphhydrate solution. The resulting mixture is heated for 30 minutes at reflux and another 40 g of 43 % sodium sulphhydrate solution and 60 g of triethanolamine are added thereto. The resulting liquid dye weights 1550 grams. The tendering of fabric dyed with the resulting dye is 35-40 % compared to about 80 % tendering caused under otherwise identical conditions by the similar C.I. Sulphur Black 1 dye which has not been modified with monoethanolamine.

EXAMPLE 23

To an autoclave containing 700 g of the coupling mass for C.I. Sulphur Black 1 prepared as in Example 1 are added 25.8 g of monoethanolamine. The resulting mixture is heated to 90°C and then the autoclave is closed and heated to 120-124°C over 15 minutes. The autoclave is held at 120-124°C for eight hours and then cooled to 90°C and 0 psig (= 0 mbar pe). A pale yellow bleed-out in the spot test on plain filter paper shows completion of the thionation. The contents of the autoclave are transferred to a 3 liter beaker and the volume is adjusted to 1500 ml by addition of water. The contents of the beaker are aerated at 65-70°C for 2.5 hours, after which time the spot test gives a blue bleed-out. The pH of the aerated mixture is lowered from 9.45 to 7.79 by addition of 44.3 g of 25 % sulphuric acid and then the mixture is filtered at 65-70°C to give 209.29 g of dye presscake having a solids content of 53.8 %.

A liquid dye is prepared by mixing 202 g of the aforementioned presscake with 74 g of 50 % sodium hydroxide, 57 g of 45 % sodium sulphhydrate and 70 g of water, heating at 103°C with stirring for two hours and adjusting the final weight of 408 g by addition of water.

The tendering of cotton twill fabric dyed using 20 opg (= 150 g/l) of the above-described liquid dye is 19.5 %.

## Claims

1. A sulphur dye having reactively combined therein:

1) at least one sulphur dye intermediate of the formula (I):

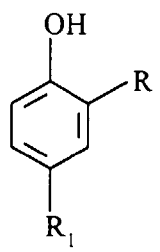

(I),

wherein R and $R_1$ are independently nitro, nitroso or amino;

2) a sulphur compound;

and 3) at least one modifying agent selected from the group consisting of: (A) an aldehyde of suitable reactivity: (B) urea; (C) a benzoquinone or a naphthoquinone; (D) monoethanolamine; and reaction products of (A), (B), (C) or (D), the amount of said combined modifying agent representing at least 2 % by weight based on the total weight of the sulphur dye.

**2.** A sulphur dye of claim 1 in which the sulphur dye intermediate is 2,4-dinitrophenol.

**3.** A sulphur dye of claim 1 in which the sulphur dye intermediate of the formula (I) is 2,4-dinitrophenol and the dye includes p-aminophenol as an additional sulphur dye intermediate.

**4.** A sulphur dye of claim 1 in which the sulphur dye intermediate of the formula (I) is 2,4-dinitrophenol and the dye includes picric acid and/or picramic acid as additional sulphur dye intermediate(s).

**5.** A sulphur dye according to any one of claims 1 to 4 wherein the modifying agent is selected from the group consisting of (A) an aldehyde, (B) urea, (C) a benzoquinone or a naphthoquinone, and reaction products of (A), (B) or (C).

**6.** A sulphur dye according to any one of claims 1 to 4 wherein the modifying agent is selected from the group consisting of (A) an aldehyde, (B) urea and (C) a benzoquinone or a naphthoquinone.

**7.** A sulphur dye according to any one of claims 1 to 4 wherein the modifying agent is (D) monoethanolamine.

**8.** A sulphur dye according to any one of claims 1 to 7 wherein the modifying agent is reactively combined in the sulphur dye.

**9.** A sulphur dye of any one of claims 1 to 6 and 8 in which the modifying agent is a combination of at least one aldehyde (A) and urea (B).

**10.** A sulphur dye of claim 9 in which the modifying agent is a combination of: (A) glyoxal, glyoxylic acid or a combination thereof; and (B) urea.

**11.** A process of preparing a sulphur dye comprising forming a mixture comprising at least one modifying agent selected from the group consisting of: (A) an aldehyde of suitable reactivity; (B) urea; (C) a benzoquinone or a naphthoquinone; and (D) monoethanolamine with:

1) a sulphur compound and sulphur dye intermediate of the formula (I):

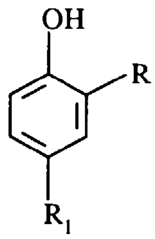

(I),

wherein R and $R_1$ are independently nitro, nitroso or amino,

or 2) intermediary reaction products of a sulphur compound and such sulphur dye intermediate, said intermediary reaction products being formed in the presence or absence of such a modifying agent,

and subjecting the resulting mixture to elevated temperature for a time sufficient to form a sulphur dye, the amount of modifying agent employed in the process being at least 2 % by weight based on the total weight of the sulphur dye.

**12.** The process of preparing a sulphur dye comprising initiating reaction between a sulphur compound and sulphur dye intermediate of the formula (I):

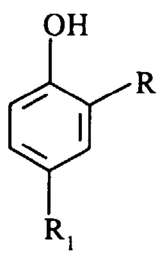

(I),

wherein R and $R_1$ are independently nitro, nitroso and amino,
to form a first intermediary mixture comprising intermediary reaction products, forming a subsequent reaction mixture comprising such intermediary reaction products and at least one modifying agent selected from the group consisting of: (A) an aldehyde of suitable reactivity; (B) urea; and (C) a benzoquinone or a naphthoquinone; and (D) monoethanolamine, and subjecting said subsequent reaction mixture to elevated temperature conditions for a time sufficient to form a sulphur dye, the total amount of modifying agent employed in such process representing at least 2 % by weight of the total weight of the sulphur dye.

**13.** The process of claim 12 in which the initiated reaction between the sulphur compound and sulphur dye intermediate is carried out in aqueous alkaline medium and in which said subsequent reaction mixture comprises an aqueous alkaline medium.

**14.** The process of claim 12 in which the first intermediary reaction mixture comprises a coupling mass containing intermediary reaction products and in which said subsequent mixture comprises upon formation said modifying agent and coupling mass.

**15.** A process according to claim 14 wherein the modifying agent is a combination of (A) glyoxal, glyoxylic acid or a combination thereof, (B) urea and (D) monoethanolamine.

**16.** The process of claim 14 in which the modifying mixture is heated at elevated temperature under pressure in a substantially closed reaction vessel.

**17.** The process of claim 14 in which the modifying agent comprises a combination of: (A) glyoxal, glyoxylic acid or combination thereof; and (B) urea in a mol ratio of (A) to (B) in the range of 4:1 to 1:4.

**18.** The process of claim 12 in which the sulphur dye intermediate of the formula (I) is 2,4-dinitrophenol and the process includes p-aminophenol as an additional sulphur dye intermediate.

**19.** The process of modifying a sulphur dye comprising reacting a sulphur compound and sulphur dye intermediate of the formula (I):

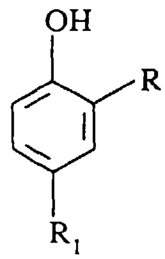

(I),

wherein R and $R_1$ are independently nitro, nitroso or amino, for a time sufficient to form a first sulphur dye, forming a reaction mixture comprising said first sulphur dye and at least one aldehyde (A) of suitable reactivity, a benzoquinone or naphthoquinone (C) or monoethanolamine (D) modifying agent and heating said reaction mixture for a time sufficient to form a modified sulphur dye, the amount of modifying agent in the reaction mixture representing at least 2 % by weight based on the total weight of the modified sulphur dye.

**20.** A process according to claim 19 which further comprises desulphurizing the first sulphur dye and wherein the said reaction mixture comprises the desulphurized sulphur dye and the modifying agent.

**21.** A process according to any one of claims 11, 12 or 19 wherein the modifying agent is selected from the group consisting of (A) an aldehyde of suitable reactivity, (B) urea; and (C) a benzoquinone or a naphthoquinone.

**22.** A process according to any one of claims 11, 12 or 19 wherein the modifying agent is (D) monoethanolamine.

**23.** The process of claim 20 in which the mixture comprising the sulphur dye and (A) additionally comprises water.

**24.** The process of claim 20 in which the sulphur dye intermediate of the formula (I) is 2,4-dinitrophenol and the process includes p-aminophenol as an additional sulphur dye intermediate.

**25.** The process of claim 12 in which the sulphur dye intermediate of the formula (I) is 2,4-dinitrophenol and the process includes picric acid and/or picramic acid as additional sulphur dye intermediate(s).

**26.** The process of dyeing a substrate dyeable with a sulphur dye comprising treating said substrate with a sulphur dye of claim 1 in leuco form under dyeing conditions and then oxidizing.

**27.** A substrate dyed in accord with the process of claim 26.

**28.** A sulphur dye produced in accord with the process of any one of claims 11 to 25.

## Patentansprüche

**1.** Schwefel farbstoff enthaltend darin reaktiv einverleibt:

1) mindestens ein Schwefelfarbstoffzwischenprodukt der Formel (I):

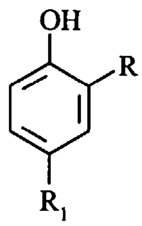

(I),

worin R und $R_1$ unabhängig Nitro, Nitroso oder Amino bedeuten;

2) eine Schwefelverbindung;

und 3) mindestens ein modifizierendes Mittel ausgewählt aus der Gruppe bestehend aus: (A) einem Aldehyd geeigneter Reaktivität; (B) Harnstoff; (C) einem Benzochinon oder einem Naphthochinon; (D) Monoäthanolamin; und Umsetzungsprodukten von (A), (B), (C) oder (D), wobei die Menge des genannten kombinierten modifizierenden Mittels mindestens 2 Gew.-% bezogen auf das Gesamtgewicht des Schwefelfarbstoffes darstellt.

**2.** Schwefelfarbstoff gemäß Anspruch 1, worin das Schwefelfarbstoffzwischenprodukt 2,4-Dinitrophenol ist.

**3.** Schwefelfarbstoff gemäß Anspruch 1, worin das Schwefelfarbstoffzwischenprodukt 2,4-Dinitrophenol ist und der Farbstoff p-Aminophenol als zusätzliches Schwefelfarbstoffzwischenprodukt beinhaltet.

**4.** Schwefelfarbstoff gemäß Anspruch 1, worin das Schwefelfarbstoffzwischenprodukt 2,4-Dinitrophenol ist und der Farbstoff Pikrinsäure und/oder Pikraminsäure als zusätzliche(s) Schwefelfarbstoffzwischenprodukt(e) beinhaltet.

**5.** Schwefelfarbstoff gemäß einem der Ansprüche 1 bis 4, worin das modifizierende Mittel aus der Gruppe bestehend aus (A) einem Aldehyd, (B) Hamstoff, (C) einem Benzochinon oder einem Naphthochinon, und Umsetzungsprodukten von (A), (B) oder (C) ausgewählt ist.

**6.** Schwefelfarbstoff gemäß einem der Ansprüche 1 bis 4, worin das modifizierende Mittel aus der Gruppe bestehend aus (A) einem Aldehyd, (B) Harnstoff und (C) einem Benzochinon oder einem Naphthochinon ausgewählt ist.

**7.** Schwefel farbstoff gemäß einem der Ansprüche 1 bis 4, worin das modifizierende Mittel (D) Monoäthanolamin ist.

**8.** Schwefelfarbstoff gemäß einem der Ansprüche 1 bis 7, worin die Schwefelverbindung aus: Schwefel, Natriumsulfid und Natriumpolysulfid ausgewählt ist.

**9.** Schwefelfarbstoff gemäß einem der Ansprüche 1 bis 6 und 8, worin das modifizierende Mittel eine Kombination von mindestens einem Aldehyd (A) und Harnstoff (B) ist.

**10.** Schwefel farbstoff gemäß Anspruch 9, worin das modifizierende Mittel eine Kombination von: (A) Glyoxal, Glyoxylsäure oder einer Kombination davon, und (B) Harnstoff ist.

**11.** Verfahren zur Herstellung eines Schwefelfarbstoffes umfassend das Bilden eines Gemisches beinhaltend mindestens ein modifizierendes Mittel ausgewählt aus der Gruppe bestehend aus: (A) einem Aldehyd geeigneter Reaktivität, (B) Harnstoff, (C) einem Benzochinon oder einem Naphthochinon, und (D) Monoäthanolamin, mit:

1) einer Schwefelverbindung und einem Schwefelfarbstoffzwischenprodukt der Formel (I):

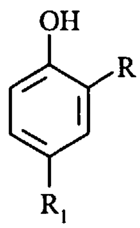

(I),

worin R und $R_1$ unabhängig Nitro, Nitroso oder Amino bedeuten,

oder 2) Zwischenprodukte der Umsetzung einer Schwefelverbindung und solch eines Schwefelfarbstoffzwischenproduktes, wobei die Zwischenprodukte der genannten Umsetzung in An- oder Abwesenheit solch eines modifizierenden Mittels hergestellt werden,

und das Unterwerfen des resultierenden Gemisches einer erhöhten Temperatur für eine Dauer, die ausreicht um einen Schwefelfarbstoff zu bilden, wobei die Menge des im Verfahren eingesetzten modifizierenden Mittels mindestens 2 Gew.-% bezogen auf das gesamte Gewicht des Schwefel farbstoffes beträgt.

**12.** Verfahren zur Herstellung eines Schwefelfarbstoffes umfassend das Beginnen der Umsetzung zwischen einer Schwefelverbindung und einem Schwefelfarbstoffzwischenprodukt der Formel (I):

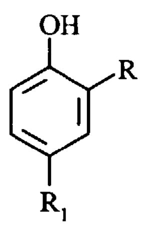

(I),

worin R und $R_1$ unabhängig Nitro, Nitroso und Amino bedeuten,
zur Bildung eines ersten Zwischengemisches welches Reaktionszwischenprodukte beinhaltet, das Bilden eines folgenden Reaktionsgemisches beinhaltend diese Reaktionszwischenprodukte und mindestens ein modifizierendes Mittel ausgewählt aus der Gruppe bestehend aus: (A) einem Aldehyd geeigneter Reaktivität, (B) Harnstoff, und (C) einem Benzochinon oder einem Naphthochinon, und (D) Monoäthanolamin, und das Unterwerfen dieses folgenden Reaktionsgemisches erhöhten Temperaturbedingungen für eine Dauer, die ausreicht um einen Schwefelfarbstoff zu bilden, wobei die Menge des in diesem Verfahren eingesetzten modifizierenden Mittels mindestens 2 Gew.-% des gesamten Schwefelfarbstoffgewichtes beträgt.

**13.** Verfahren gemäß Anspruch 12, worin die begonnene Umsetzung zwischen der Schwefelverbindung und dem Schwefelfarbstoffzwischenprodukt in wäßrigem alkalischem Medium durchgeführt wird und worin das genannte folgende Reaktionsgemisch ein wäßriges alkalisches Medium beinhaltet.

**14.** Verfahren gemäß Anspruch 12, worin das erste Reaktionszwischengemisch eine Kupplungsmasse beinhaltet, welche Reaktionszwischenprodukte enthält, und worin das genannte folgende Gemisch nach seiner Bildung dieses modifizierende Mittel und diese Kupplungsmasse beinhaltet.

**15.** Verfahren gemäß Anspruch 15, worin das modifizierende Mittel eine Kombination von (A) Glyoxal, Glyoxylsäure oder eine Kombination davon, (B) Harnstoff und (D) Monoäthanolamin ist.

**16.** Verfahren gemäß Anspruch 15, worin das modifizierende Gemisch unter Druck in einem im wesentlichen geschlossenen Reaktionsgefäß, auf erhöhte Temperatur erhitzt wird.

**17.** Verfahren gemäß Anspruch 15, worin das modifizierende Mittel eine Kombination von: (A) Glyoxal, Glyoxylsäure oder eine Kombination davon, und (B) Harnstoff, in einem Molverhältnis von (A) zu (B) im Bereich von 4:1 bis 1:

4, beinhaltet.

**18.** Verfahren gemäß Anspruch 12, worin das Schwefelfarbstoffzwischenprodukt der Formel (I) 2,4-Dinitrophenol ist und das Verfahren p-Aminophenol als zusätzliches Schwefelfarbstoffzwischenprodukt umfaßt.

**19.** Verfahren zur Modifikation eines Schwefelfarbstoffes, umfassend das Umsetzen einer Schwefelverbindung und eines Schwefelfarbstoffzwischenproduktes der Formel (I):

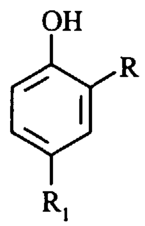

(I),

worin R und $R_1$ unabhängig Nitro, Nitroso oder Amino bedeuten,
für eine Dauer, die ausreicht um einen ersten Schwefelfarbstoff zu bilden, das Bilden eines Reaktionsgemisches welches diesen ersten Schwefelfarbstoff und mindestens einen Aldehyd (A) geeigneter Reaktivität, ein Benzochinon oder Naphthochinon (C) oder Monoäthanolamin (D) als modifizierendes Mittel beinhaltet, und das Erhitzen dieses Reaktionsgemisches für eine Dauer, die ausreicht um einen modifizierten Schwefelfarbstoff zu bilden, wobei die Menge des modifizierenden Mittels im Reaktionsgemisch mindestens 2 Gew.-% bezogen auf das Gesamtgewicht des modifizierten Schwefelfarbstoffes darstellt.

**20.** Verfahren gemäß Anspruch 19, weiter umfassend das Entschwefeln des ersten Schwefelfarbstoffes und worin das genannte Reaktionsgemisch den entschwefelten Schwefel farbstoff und das modifizierende Mittel beinhaltet.

**21.** Verfahren gemäß einem der Ansprüche 11, 12 oder 19, worin das modifizierende Mittel aus der Gruppe bestehend aus (A) einem Aldehyd geeigneter Reaktivität, (B) Harnstoff, und (C) einem Benzochinon oder einem Naphthochinon, ausgewählt ist.

**22.** Verfahren gemäß einem der Ansprüche 11, 12 oder 19, worin das modifizierende Mittel (D) Monoäthanolamin ist.

**23.** Verfahren gemäß Anspruch 20, worin das den Schwefelfarbstoff und (A) beinhaltende Gemisch zusätzlich Wasser beinhaltet.

**24.** Verfahren gemäß Anspruch 20 worin das Schwefelfarbstoffzwischenprodukt der Formel (I) 2,4-Dinitrophenol ist und das Verfahren p-Aminophenol als zusätzliches Schwefelfarbstoffzwischenprodukt umfaßt.

**25.** Verfahren gemäß Anspruch 12, worin das Schwefelfarbstoffzwischenprodukt der Formel (I) 2,4-Dinitrophenol ist und das Verfahren Pikrinsäure und/oder Pikraminsäure als zusätzliche(s) Schwefelfarbstoffzwischenprodukt(e) umfaßt.

**26.** Verfahren zum Färben eines mit einem Schwefelfarbstoff färbbaren Substrates, umfassend das Behandeln des genannten Substrates mit einem Schwefelfarbstoff gemäß Anspruch 1 in Leukoform unter Färbebedingungen und dann Oxydieren.

**27.** Substrat gefärbt nach dem Verfahren gemäß Anspruch 26.

**28.** Schwefelfarbstoff hergestellt nach dem Verfahren gemäß einem der Ansprüche 11 bis 25.

## Revendications

**1.** Un colorant au soufre contenant, combinés par réaction, :

1) au moins un produit intermédiaire des colorants au soufre qui répond à la formule (I) :

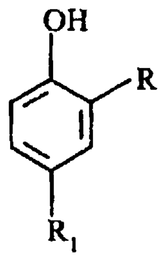

(I),

dans laquelle R et $R_1$ signifient indépendamment un groupe nitro, nitroso ou amino;

2) un composé du soufre;

et 3) au moins un agent modifiant choisi dans le groupe constitué par : (A) un aldéhyde de réactivité appropriée; (B) l'urée; (C) une benzoquinone ou une naphtoquinone; (D) la monoéthanolamine; et les produits de réaction de (A), (B), (C) ou (D), la quantité dudit agent modifiant combiné représentant au moins 2% en poids par rapport au poids total du colorant au soufre.

**2.** Un colorant au soufre selon la revendication 1, dans lequel le produit intermédiaire des colorants au soufre est le 2,4-dinitrophénol.

**3.** Un colorant au soufre selon la revendication 1, dans lequel le produit intermédiaire des colorants au soufre qui répond à la formule (I) est le 2,4-dinitrophénol et le colorant comprend le p-aminophénol en tant que produit intermédiaire des colorants au soufre supplémentaire.

**4.** Un colorant au soufre selon la revendication 1, dans lequel le produit intermédiaire des colorants au soufre qui répond à la formule (I) est le 2,4-dinitrophénol et le colorant comprend l'acide picrique et/ou l'acide picramique en tant que produit(s) intermédiaire(s) des colorants au soufre supplémentaire(s).

**5.** Un colorant au soufre selon l'une quelconque des revendications 1 à 4, dans lequel l'agent modifiant est choisi dans le groupe constitué par (A) un aldéhyde, (B) l'urée, (C) une benzoquinone ou une naphtoquinone, et les produits de réaction de (A), (B) ou (C).

**6.** Un colorant au soufre selon l'une quelconque des revendications 1 à 4, dans lequel l'agent modifiant est choisi dans le groupe constitué par (A) un aldéhyde, (B) l'urée et (C) une benzoquinone ou une naphtoquinone.

**7.** Un colorant au soufre selon l'une quelconque des revendications 1 à 4, dans lequel l'agent modifiant est (D) la monoéthanolamine.

**8.** Un colorant au soufre selon l'une quelconque des revendications 1 à 7, dans lequel le composé du soufre est choisi parmi : le soufre, le sulfure de sodium et le polysulfure de sodium.

**9.** Un colorant au soufre selon l'une quelconque des revendications 1 à 6 et 8, dans lequel l'agent modifiant est une combinaison d'au moins un aldéhyde (A) et d'urée (B).

**10.** Un colorant au soufre selon la revendication 9, dans lequel l'agent modifiant est une combinaison de : (A) le glyoxal, l'acide glyoxylique ou une combinaison de ceux-ci; et (B) l'urée.

**11.** Un procédé de préparation d'un colorant au soufre, comprenant la formation d'un mélange comprenant au moins un agent modifiant choisi dans le groupe constitué par : (A) un aldéhyde de réactivité appropriée; (B) l'urée; (C) une benzoquinone ou une naphtoquinone; et (D) la monoéthanolamine, avec :

1) un composé du soufre et un produit intermédiaire des colorants au soufre qui répond à la formule (I):

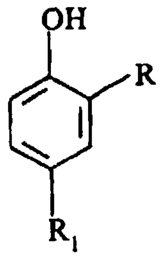

(I),

dans laquelle R et $R_1$ signifient indépendamment un groupe nitro, nitroso ou amino, ou

2) les produits de réaction intermédiaires d'un composé du soufre et d'un tel produit intermédiaire des colorants au soufre, lesdits produits de réaction intermédiaires étant formés en présence ou en l'absence d'un tel agent modifiant,

et l'opération consistant à soumettre le mélange résultant à une température élevée pendant un temps suffisant pour former un colorant au soufre, la quantité d'agent modifiant employé dans le procédé étant d'au moins 2% en poids par rapport au poids total du colorant au soufre.

**12.** Un procédé de préparation d'un colorant au soufre, comprenant le déclenchement de la réaction entre un composé du soufre et un produit intermédiaire des colorants au soufre qui répond à la formule (I) :

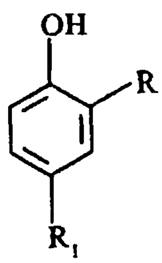

(I),

dans laquelle R et $R_1$ signifient indépendamment un groupe nitro, nitroso et amino,
pour former un premier mélange intermédiaire comprenant des produits de réaction intermédiaires, la formation d'un mélange de réaction subséquent comprenant de tels produits de réaction intermédiaires et au moins un agent modifiant choisi dans le groupe constitué par : (A) un aldéhyde de réactivité appropriée; (B) l'urée; et (C) une benzoquinone ou une naphtoquinone; et (D) la monoéthanolamine, et l'opération consistant à soumettre ledit mélange de réaction subséquent à des conditions de température élevée pendant un temps suffisant pour former un colorant au soufre, la quantité totale d'agent modifiant employé dans un tel procédé représentant au moins 2% en poids du poids total du colorant au soufre.

**13.** Un procédé selon la revendication 12, dans lequel la réaction déclenchée entre le composé du soufre et le produit intermédiaire des colorants au soufre est effectuée en milieu alcalin aqueux, et dans lequel ledit mélange de réaction subséquent comprend un milieu alcalin aqueux .

**14.** Un procédé selon la revendication 12, dans lequel le premier mélange de réaction intermédiaire comprend une masse de couplage contenant des produits de réaction intermédiaires, et dans lequel ledit mélange subséquent comprend après sa formation ledit agent modifiant et ladite masse de couplage.

**15.** Un procédé selon la revendication 14, dans lequel l'agent modifiant est une combinaison de (A) le glyoxal, l'acide glyoxylique ou une combinaison de ceux-ci, (B) l'urée et (D) la monoéthanolamine.

**16.** Un procédé selon la revendication 14, dans lequel le mélange modifiant est chauffé à une température élevée, sous pression dans un récipient substantiellement clos.

**17.** Un procédé selon la revendication 14, dans lequel l'agent modifiant comprend une combinaison de : (A) le glyoxal, l'acide glyoxylique ou une combinaison de ceux-ci; et (B) l'urée, dans un rapport molaire de (A) à (B) compris entre 4:1 et 1:4.

**18.** Un procédé selon la revendication 12, dans lequel le produit intermédiaire des colorants au soufre qui répond à la formule (I) est le 2,4-dinitrophénol et le procédé comprend le p-aminophénol en tant que produit intermédiaire des colorants au soufre supplémentaire.

**19.** Un procédé de modification d'un colorant au soufre, comprenant la réaction d'un composé du soufre et d'un produit intermédiaire des colorants au soufre qui répond à la formule (I) :

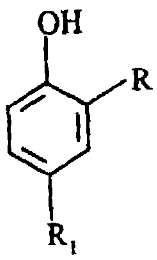

(I),

dans laquelle R et $R_1$ signifient indépendamment un groupe nitro, nitroso ou amino,
pendant un temps suffisant pour former un premier colorant au soufre, la formation d'un mélange de réaction comprenant ledit premier colorant au soufre et au moins un aldéhyde (A) de réactivité appropriée, une benzoquinone ou une naphtoquinone (C) ou la monoéthanolamine (D) en tant qu'agent modifiant, et le chauffage dudit mélange de réaction pendant un temps suffisant pour former un colorant au soufre modifié, la quantité d'agent modifiant dans le mélange de réaction représentant au moins 2% en poids par rapport au poids total du colorant au soufre modifié.

**20.** Un procédé selon la revendication 19, qui comprend en outre la désulfurisation du premier colorant au soufre et dans lequel ledit mélange de réaction comprend le colorant au soufre désulfurisé et l'agent modifiant.

**21.** Un procédé selon l'une quelconque des revendications 11, 12 ou 19, dans lequel l'agent modifiant est choisi dans le groupe constitué par (A) un aldéhyde de réactivité appropriée, (B) l'urée, et (C) une benzoquinone ou une naphtoquinone.

**22.** Un procédé selon l'une quelconque des revendications 11, 12 ou 19, dans lequel l'agent modifiant est (D) la monoéthanolamine.

**23.** Un procédé selon la revendication 20, dans lequel le mélange comprenant le colorant au soufre et (A) comprend en outre de l'eau.

**24.** Un procédé selon la revendication 20, dans lequel le produit intermédiaire des colorants au soufre qui répond à la formule (I) est le 2,4-dinitrophénol et le procédé comprend le p-aminophénol en tant que produit intermédiaire des colorants au soufre supplémentaire.

**25.** Un procédé selon la revendication 12, dans lequel le produit intermédiaire des colorants au soufre qui répond à la formule (I) est le 2,4-dinitrophénol et le procédé comprend l'acide picrique et/ou l'acide picramique en tant que produit(s) intermédiaire(s) des colorants au soufre supplémentaire(s).

**26.** Un procédé de teinture d'un substrat susceptible d'être teint avec un colorant au soufre, comprenant le traitement dudit substrat par un colorant au soufre de la revendication 1 sous forme leuco sous les conditions de la teinture, et ensuite l'oxydation.

**27.** Un substrat teint selon le procédé de la revendication 26.

**28.** Un colorant au soufre préparé selon le procédé de l'une quelconque des revendications 11 à 25.